# FASCICULE DE BREVET EUROPEEN

(11) **EP 0 699 224 B1**
(45) Date de publication et mention de la délivrance du brevet: **08.01.1997**
(21) Numéro de dépôt: 94915587.3
(22) Date de dépôt: 04.05.1994
(51) Int. Cl.: C10G 11/18, B01J 8/24, B01J 8/08, F28D 13/00

(54) **PROCEDE DE REGULATION DU NIVEAU THERMIQUE D'UN SOLIDE DANS UN ECHANGEUR DE CHALEUR PRESENTANT DES NAPPES CYLINDRIQUES DE TUBES**
VERFAHREN ZUR REGELUNG DES ERHITZUNGSGRADES EINES FESTSTOFFES IN EINEM WAERMETAUSCHER MIT RINGFOERMIG ANGEORDNETEN ROHRBUENDELN
METHOD FOR CONTROLLING THE HEAT LEVEL OF A SOLID IN A HEAT EXCHANGER WITH CYLINDRICAL TUBE LAYERS

(30) Priorité: 10.05.1993 FR 9305685
(43) Date de publication de la demande: 06.03.1996
(73) Titulaire: INSTITUT FRANCAIS DU PETROLE, 92506 Rueil-Malmaison Cédex (FR)
(72) Inventeur: BONIFAY, Régis, F-92600 Asnières (FR); GAUTHIER, Thierry, F-69230 Saint-Genis-Laval (FR); PONTIER, Renaud, F-38200 Vienne (FR); HOFFMANN, Frédéric, F-75010 Paris (FR)
(74) Mandataire: Andreeff, François
(86) Numéro de dépôt international: FR9400522
(87) Numéro de publication internationale: WO9426845

(56) Documents cités:
- EP-A- 0 092 065
- EP-A- 0 093 063
- EP-A- 0 153 214
- EP-A- 0 192 906
- EP-A- 0 197 486
- EP-A- 0 403 381
- DE-A- 3 305 471
- FR-A- 2 015 263
- FR-A- 2 124 043
- US-A- 2 963 422
- US-A- 4 422 302
- US-A- 4 434 245

## Description

L'invention concerne l'utilisation d'un faisceau de tubes à enroulement particulier dans un échangeur de chaleur opérant en lit fluidisé. Elle concerne plus généralement un procédé de régulation ou de contrôle thermique en lit fluidisé et en continu d'un solide pulvérulent. Elle concerne notamment un procédé de régénération d'un catalyseur usé avec échange thermique en lit fluidisé. Plus particulièrement, le procédé peut s'appliquer à la régénération de catalyseurs particulièrement chargés en résidus hydrocarbonés et en coke après réaction avec une charge d'hydrocarbures. Elle peut concerner les catalyseurs d'hydrotraitement, d'hydrocraquage ou de craquage catalytique, de réformage ou même toute masse de contact utilisée par exemple dans les procédés de craquage thermique.

A titre d'exemple purement illustratif, on décrira l'utilisation du faisceau de tubes à un procédé de régénération de catalyseur usé issu d'un procédé de craquage catalytique, en lit fluidisé, de charges lourdes ayant un carbone Conradson élevé, telles qu'un résidu atmosphérique, un résidu sous vide, un résidu désasphalté, ces résidus pouvant être hydrotraités.

Ce procédé s'appliquera tout particulièrement au contrôle de la température.

Les procédés de craquage catalytique convertissent les charges hydrocarbonées en produits plus légers tels que des essences. Initialement, les charges était relativement légères, des gazoles par exemple et pour obtenir une efficacité maximale de conversion à partir de catalyseurs zéolithiques très actifs, il était nécessaire de retirer la quantité maximum de coke qui s'était déposée sur ces catalyseurs et qui diminuait son activité, durant une étape de régénération à une température se situant entre 520 et 800°C.

La demande pressante en carburants amène les raffineurs à s'intéresser à des charges de plus en plus lourdes, comportant des hydrocarbures à haut point d'ébullition, par exemple à un point d'ébullition supérieur à 550°C, ayant un carbone Conradson élevé ou une concentration en métaux importante. Du coke et des hydrocarbures lourds peuvent alors se déposer sur le catalyseur en quantité importante durant la phase de craquage catalytique et sa régénération par une combustion peut provoquer un dégagement de chaleur important qui peut détériorer l'appareillage et désactiver le catalyseur, notamment lors de longues expositions à des températures supérieures à 800°C. Il devient alors impératif de contrôler la régénération du catalyseur. Ce problème se pose notamment lorsqu'on veut appliquer à une technologie existant depuis longtemps et traitant essentiellement des charges hydrocarbonées conventionnelles, un procédé mettant en jeu des charges beaucoup plus lourdes.

L'arrière plan technologique est illustré par les documents suivants : EP-A-0 092 065, US-A-2 963 422, EP-A-0 197 486, EP-A-0 153 214, EP-A-192 906 et EP-A-0 093 063. D'autre part, le brevet EP-A-0 403 381 décrit un échangeur de chaleur à double chambre raccordé à un régénérateur de catalyseur par une seule ouverture d'entrée et de sortie, ce qui contribue à limiter l'efficacité de refroidissement de l'échangeur.

Par ailleurs l'art antérieur est illustré par le brevet US 4434245 qui décrit un échange thermique de catalyseur prélevé dans une zone de désengagement située au dessus d'une zone de combustion et comprenant des tubes bayonnettes verticaux. Ceux-ci ont l'inconvénient de présenter à la paroi des tubes une couche limite de catalyseur défluidisé qui s'écoule le long du tube et dégrade l'échange thermique.
Pour remédier à cet inconvénient, il est généralement nécessaire d'utiliser une technologie complexe et encombrante qui diminue le degré de fiabilité du système.
Par ailleurs, une plaque tubulaire horizontale dans l'échangeur thermique supportant les tubes maintient l'intégrité mécanique de l'ensemble, mais les conditions très différentes de température et de pression de part et d'autre de la plaque, par exemple 730°C, 3 bars côté catalyseur et 275°C, 60 bars côté eau de refroidissement, créent un stress intense et affectent l'intégrité mécanique de l'ensemble.
Un des objets de l'invention est de remédier aux inconvénients de l'art antérieur de façon à réaliser un échange thermique maximal et le plus homogène possible.
L'invention concerne donc un procédé de régulation ou du contrôle du niveau thermique dans un traitement en lit fluidisé et en continu d'un solide pulvérulent, dans lequel on effectue un traitement de ce solide dans une zone de traitement à lit fluidisé, on soutire de la dite zone une partie au moins du solide, on envoie cette partie de solide dans une zone de régulation ou contrôle du niveau thermique externe avantageusement allongée et ayant un axe de symétrie contenant au moins un faisceau de tubes d'échange thermique dans lequel circule un fluide de refroidissement vaporisable, on procède à une régulation thermique en lit fluidisé par échange de chaleur indirect avec le fluide, on soutire la partie du solide ainsi régulée pour le recycler dans la dite zone de traitement ou pour le recycler dans une autre zone de traitement. Plus précisément, on fait circuler de manière descendante au moyen d'un fluide de fluidisation inerte ou non, en lit fluidisé, la dite partie du solide sur le faisceau de tubes qui est enroulé ou disposé de telle façon que le courant de solide croise lesdits tubes, de préférence sur sensiblement toute la section de la zone de régulation, et en ce qu'on fait circuler le fluide de refroidissement dans le faisceau de tubes selon une seule direction.

Selon une première variante préférée du procédé, le faisceau d'échange thermique peut comporter des tubes enroulés en hélice suivant plusieurs diamètres par rapport à un axe d'enroulement sensiblement parallèle à l'axe de symétrie de la zone de régulation, de telle façon que les tubes de même diamètre d'enroulement forment une couche ou nappe cylindrique et que les diverses couches ou nappes cylindriques ainsi formées sont disposées les unes dans les autres, de préférence de manière sensiblement concentrique.

Cette configuration décrite dans le brevet FR 2124043 et appliquée aux générateurs de vapeur réchauffés par du sodium liquide permet dans le cadre de l'invention un échange maximal en lit fluidisé dans la mesure où sensiblement tout le volume de l'échangeur thermique, cylindrique, contenant le solide en phase dense peut être refroidi par le faisceau de tubes.

Selon une deuxième variante, la zone de régulation thermique peut comporter une pluralité de faisceaux tubulaires comportant une première série de tronçons de tubes sensiblement parallèles dont les axes sont situés dans un premier plan et une seconde série de tronçons de tubes sensiblement parallèles dont les axes se trouvent dans un second plan sensiblement parallèle au premier, les tronçons associés à un plan présentant une inclinaison sensiblement égale et opposée à celle des tronçons de l'autre plan par rapport au plan longitudinal contenant ledit axe de symétrie, les tronçons de tubes ayant des extrémités adjacentes d'un même côté reliés par des coudes, l'ensemble des faisceaux de tubes étant disposés de manière sensiblement parallèle au plan contenant l'axe de symétrie de la zone de régulation thermique.

Cette configuration est décrite dans le brevet FR 2015263.
Selon une troisième variante, la zone de régulation thermique peut comporter une pluralité de faisceaux de tubes dont chacun d'eux comprend des tronçons de tubes sensiblement parallèles entre eux et disposés dans un même plan, les extrémités adjacentes, d'un même côté, de deux tronçons successifs étant reliées par des coudes, l'ensemble des faisceaux de tubes étant disposé de manière sensiblement parallèle au plan contenant l'axe de symétrie de la zone de régulation thermique.

Ces faisceaux de tubes peuvent être avantageusement utilisés dans un procédé appliqué à une régénération en lit fluidisé et en continu d'un catalyseur usagé par combustion du coke déposé sur le catalyseur au cours d'une réaction de conversion d'hydrocarbures dans une zone réactionnelle. Le procédé comprend alors au moins une zone de régénération dans laquelle on introduit ledit catalyseur en provenance de ladite zone réactionnelle, on effectue en général une régénération du catalyseur dans une zone à lit fluidisé dense en présence d'un gaz contenant de l'oxygène dans des conditions de régénération, on soutire du lit fluidisé dense une partie au moins du catalyseur, on envoie cette partie de catalyseur dans la zone de régulation ou d'échange thermique, on refroidit par échange de chaleur indirect avec le fluide de refroidissement ladite partie du catalyseur, et on réintroduit cette partie du catalyseur ainsi refroidi dans le lit fluidisé dense de la zone de régénération.

Selon un mode de mise en oeuvre, on peut recycler le catalyseur refroidi de la partie inférieure de la zone d'échange thermique vers le lit dense du générateur d'où il a été prélevé au moyen d'une injection à co-courant de gaz de fluidisation contenant de l'oxygène. On fait alors circuler de manière globalement ascendante le catalyseur refroidi vers le régénérateur grâce à des moyens de recyclage comprenant une conduite d'évacuation du catalyseur contrôlée par une vanne reliée à une jonction en Y ou en J par exemple, elle-même connectée à une colonne de remontée (gaz lift) du catalyseur comprenant à sa base une injection d'air de fluidisation.

Selon une autre variante d'utilisation du faisceau appliquée à une régénération en lit fluidisé et en continu d'un catalyseur usagé par combustion du coke déposé sur celui-ci comprenant deux zones de régénération, on peut effectuer une première régénération du catalyseur dans une première zone de régénération, on envoie le catalyseur au moins en partie régénéré dans une seconde zone de régénération située au-dessus de la première, on effectue une seconde régénération et on refroidit une partie au moins du catalyseur provenant de la seconde zone de régénération dans les conditions décrites ci-dessus et on soutire le catalyseur ainsi refroidi pour l'envoyer dans la première zone de régénération ou le renvoyer dans la seconde zone de régénération.
Selon une première mise en oeuvre, dans le cas où il est recyclé dans la première zone de régénération il peut y être introduit par gravité (voie descendante).
Selon une deuxième mise en oeuvre, dans le cas où il est recyclé dans la première zone de régénération, il peut y être recyclé de manière globalement ascendante par les moyens de recyclage décrits ci-avant comprenant la colonne de remontée.
Selon une troisième mise en oeuvre, dans le cas où il est recyclé dans la deuxième zone de régénération, il peut y être recyclé par les moyens de recyclage décrits ci-avant comportant la colonne de remontée.

Selon une autre variante d'utilisation du faisceau dans un dispositif comportant deux zones de régénération, on peut effectuer une première régénération du catalyseur dans une première zone de régénération, on refroidit une partie au moins du catalyseur provenant de la première zone de régénération dans l'échangeur thermique selon l'invention et on recycle le catalyseur refroidi dans ladite première zone de régénération grâce aux moyens de recyclage décrits ci-avant comportant la colonne de remontée. Le catalyseur est ensuite envoyé de la première zone de régénération dans la seconde située au-dessus de la première.

Quel que soit le mode d'enroulement des tubes du faisceau décrit ci-avant, la distance entre axe des tubes définissant le pas d'une spire peut être de 1,5 fois à 10 fois leur diamètre et de préférence de 2 à 3 fois leur diamètre. Cette distance peut être celle mesurée à partir de tubes disposés selon une même nappe cylindrique ou selon deux nappes cylindriques voisines (cas de la première variante). Cette distance peut être aussi celle mesurée dans le cas des tubes disposés selon les deuxième et troisième variantes.

On a réalisé un bon échange thermique lorsque la vitesse de gaz de fluidisation dans la zone d'échange thermique était en général de 0,01 m/s à 0,75 m/s et de préférence de 0,05 m/s à 0,3 m/s avec un faisceau de tubes où le fluide de refroidissement et la vapeur engendrée circulaient de préférence de bas en haut à une vitesse d'écoulement habituellement comprise entre 0,5 et 2,5 m/s par exemple et de préférence 1 à 2 m/s, c'est-à-dire à contre-courant de l'écoulement du catalyseur dans la zone d'échange thermique.

De plus, le courant de catalyseur croisant les tubes est en permanence renouvelé à la surface du tube dans son courant descendant.

Enfin sa grande compacité (par exemple 13 à 16 m²/m³ d'échangeur) et sa facilité de mise en oeuvre d'installation ou de retrait sont des atouts remarquables.

Par ailleurs, le faisceau de tubes peut absorber avantageusement les dilatations radiales et axiales.

Enfin, du fait de la bonne efficacité de l'échange, le système nécessite l'emploi d'une surface installée par unité de volume moindre que celle de l'art antérieur, ce qui a également l'avantage de laisser un volume plus grand au catalyseur qui circule et par conséquent le maintien d'une bonne fluidisation sans l'emploi de moyens auxiliaires est favorisé.

Le fluide refroidissant qui circule dans l'échangeur peut être de l'air, de l'eau, de la vapeur d'eau ou des mélanges de ces fluides.

Le catalyseur régénéré selon l'invention est également de type conventionnel, tel que les silices-alumines de type zéolithique ou amorphe ayant avantageusement une granulométrie de 30 à 100 micromètres.

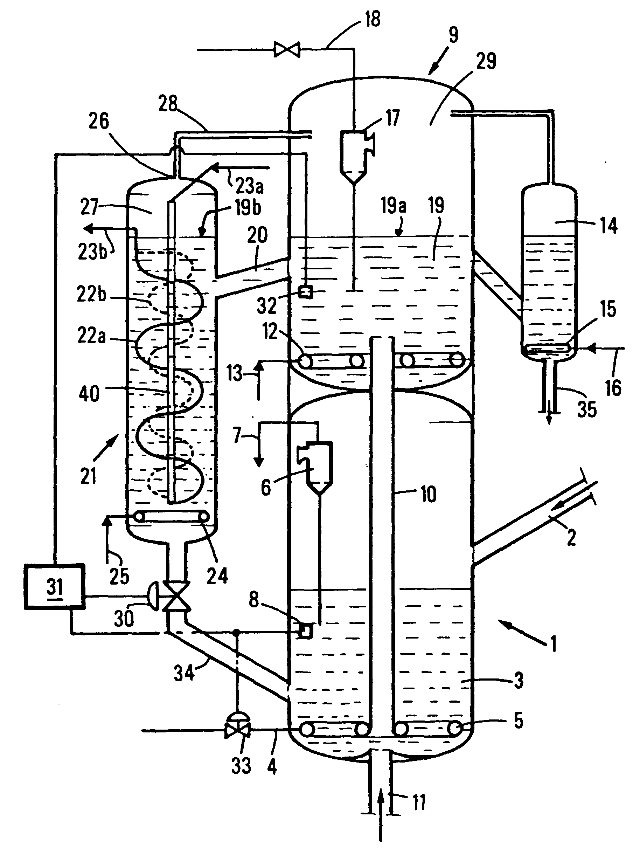

L'invention sera mieux comprise au vu de la figure illustrant le procédé et le dispositif.

Un premier régénérateur 1 provenant d'une unité de craquage catalytique reçoit par une ligne 2 en provenance d'un séparateur strippeur non représenté du catalyseur sur lequel s'est déposé du coke pendant la réaction de craquage catalytique. Cette ligne débouche dans le lit catalytique en un endroit approprié de préférence dans la phase diluée située au-dessus du lit fluidisé dense 3. Un gaz de régénération contenant de l'oxygène est amené par une ligne 4 dans un organe de fluidisation 5 tel qu'une grille, un anneau ou une tuyauterie de distribution, à la base du régénérateur et permet la fluidisation en lit dense du catalyseur et la combustion à contre-courant d'environ 50 à 90% du coke de manière continue. Les fumées de régénération et le catalyseur entraîné sont séparés dans des cyclones 6 et les fumées de régénération contenant comme produits de combustion majoritaires du monoxyde de carbone, du dioxyde de carbone et de la vapeur d'eau sont évacuées par une ligne 7 vers un incinérateur.

La température du lit fluidisé 3 est mesurée à l'aide d'une sonde 8. Lorsque cette température décroit au-dessous d'une valeur T1 de consigne, du fait de l'introduction de catalyseur relativement froid introduit par les lignes 34 comme on le verra ci-après, le débit de fluide oxydant (de fluidisation) amené à l'organe de fluidisation 5 et régulé par une vanne de contrôle 33 sur la ligne 4 est augmenté jusqu'à ce que la température mesurée en 8 retrouve la valeur de consigne.

Les particules de catalyseur partiellement régénéré sont ensuite transférées vers un second régénérateur 9 disposé au-dessus du premier régénérateur 1, par le conduit 10 alimenté en air par la ligne 11. A la base du second régénérateur, est disposé un diffuseur 12 alimenté en air par la ligne 13. La combustion du catalyseur partiellement régénéré est réalisée dans le lit dense 19 dont la partie supérieure définit un niveau 19a à une hauteur appropriée, fonction de l'aération réalisée.

Une partie des particules de catalyseur régénéré est évacuée latéralement dans une enceinte tampon 14. Dans cette enceinte, la fluidisation des particules est habituellement contrôlée par un diffuseur annulaire 15, alimenté en gaz de fluidisation, tel que de l'air ou un gaz inerte, par une ligne 16. A partir de l'enceinte 14, les particules du catalyseur régénéré sont recyclées par un conduit 35 à l'alimentation d'un élévateur (riser) non représenté, en quantité déterminée par l'ouverture ou la fermeture d'une vanne. A la partie supérieure du second régénérateur, les gaz de combustion sont séparés des particules de catalyseur par des cyclones externes 17 et sont évacués par une ligne 18, séparée de la ligne d'évacuation 7 des fumées de première régénération.

Une partie du catalyseur chaud et une partie des fumées à une température de 600 à 850°C sont prélevés dans le lit dense 19 du second régénérateur en un point situé au-dessus de l'organe d'injection d'air 12 et amenés par gravité, grâce à une conduite 20 inclinée vers le bas, par exemple de 30 à 60 degrés d'angle à compter de l'axe de l'échangeur, dans un échangeur de chaleur 21 adapté à échanger par échange indirect de la chaleur. Cet échangeur est vertical, de forme allongée, cylindrique et contient un faisceau d'échange thermique garnissant l'espace contenant sensiblement tout le lit dense de catalyseur, à l'intérieur d'une enveloppe. Le faisceau est un faisceau tubulaire, composé d'une pluralité de tubes 22a, 22b, enroulés en hélice selon plusieurs diamètres par rapport à l'axe vertical de l'enveloppe de l'échangeur. Les couches de même diamètre d'enroulement forment une couche ou nappe en forme de cylindre et les divers cylindres coaxiaux ainsi définis sont disposés les uns dans les autres. La chambre délimitée par l'enveloppe contient le catalyseur maintenu en lit dense à travers le faisceau de tubes grâce à un moyen de fluidisation 24 (anneau ou grille) qui introduit grâce à une ligne 25 de l'air, à contre-courant du sens de l'écoulement du catalyseur. Ce catalyseur circule de haut en bas à travers le faisceau en croisant les tubes, sur sensiblement toute la section de l'échangeur et cède sa chaleur à un fluide approprié tel que de l'eau sous pression amenée par une ligne 23a. Cette ligne alimente l'extrémité supérieure d'une conduite 40 cylindrique centrale, isolée thermiquement, qui sert d'axe d'enroulement aux tubes disposés en hélice et en même temps de raidisseur et donc de système de maintien. Cette conduite cylindrique axiale où ne s'effectue sensiblement aucun échange thermique alimente à son tour à partir de niveaux différents à compter de son extrémité inférieure les différentes nappes tubulaires cylindriques de sorte que le mélange eau-vapeur remonte à contre-courant du catalyseur. C'est ainsi que les spires de plus grand diamètre d'enroulement sont alimentées par des brins de tubes coudés raccordés en des points les plus bas de la conduite axiale alors que celles de plus petit diamètre sont raccordées plus haut.

Les tubes du faisceau se terminent à la partie supérieure par des brins coudés verticaux qui se raccordent à des plaques tubulaires de boîtes à vapeur ou collecteurs toriques non représentés offrant une très bonne résistance mécanique. Le mélange eau-vapeur est évacué par une ligne 23b raccordée à ces collecteurs.

La conduite 20 d'amenée du catalyseur chaud débouche dans l'échangeur en un point de jonction situé sous le niveau 19a du lit dense du second régénérateur, par exemple en un point situé à une distance de l'extrémité supérieure 26 de l'échangeur comprise entre le quart et le tiers de sa hauteur. Le catalyseur est maintenant en lit fluidisé dense par le moyen de fluidisation 24 (anneau) à travers le faisceau de tubes jusqu'à un niveau 19b au-dessus du point de jonction sensiblement identique à celui 19a du lit dense dans le régénérateur 29. Ce niveau 19b est généralement fonction des vitesses de fluidisation respectives dans le second régénérateur et l'échangeur thermique et donc des masses volumiques respectives. Il peut s'établir ainsi une faible différence de niveau du catalyseur dans le régénérateur et l'échangeur.

La hauteur du faisceau d'échangeur et les paramètres déterminant sa compacité sont généralement calculés pour que le faisceau occupe sensiblement tout le volume du lit dense dans l'échangeur. Il atteint de façon préférée, sensiblement le niveau le plus haut du lit dense dans l'échangeur, compte tenu des différences de pression qui peuvent exister dans la zone d'échange et dans le régénérateur.

La hauteur de l'échangeur est choisie de telle façon que par rapport au niveau dans le régénérateur, une zone libre dite zone de désengagement 27 de 1 à 2,5 m dans l'échangeur soit aménagée au-dessus du lit dense pour permettre la séparation du gaz de fluidisation et des éventuelles fumées de régénération du catalyseur. Une ligne de dégazage 28 évacue les fumées et les gaz de la phase diluée de l'extrémité supérieure de l'échangeur vers la phase fluidisée diluée 29 au-dessus du lit fluidisé dense du second régénérateur. Son diamètre est choisi de telle façon que le rapport du diamètre de la ligne de dégazage sur celui de la conduite 20 d'admission du catalyseur soit compris entre 3 et 6. La vitesse de sortie des gaz est en général de 3 à 15 m/s.

Des moyens de soutirage et de recyclage 34 comprennent une conduite sensiblement verticale dans laquelle le catalyseur s'écoule par gravité qui est connectée à une jonction en Y ou en J située sous le premier régénérateur. Le catalyseur est envoyé par un organe de remontée (lift) relié à la jonction, qui l'accélère grâce à de l'air de fluidisation dans la conduite et le recycle dans la phase dense du premier régénérateur, de préférence au-dessus de l'organe de fluidisation 5.

A la sortie de l'échangeur 21, la vanne 30, telle qu'une vanne à glissière, située en dessous de l'extrémité inférieure du premier régénérateur et en amont du "lift" permet de contrôler le débit de catalyseur transféré d'un régénérateur à l'autre, dès que la température du catalyseur régénéré excède la valeur de consigne requise.

On a représenté la figure avec un écoulement descendant du catalyseur en sortie de l'échangeur puis avec un écoulement ascendant jusque dans le première régénérateur. On aurait pu selon une variante non représentée, introduire par voie descendante le catalyseur directement dans la phase dense du premier régénérateur.

Le débit de catalyseur traversant l'échangeur thermique est ajusté pour maintenir la température régnant dans le deuxième régénérateur et donc, finalement, la température d'entrée dans la zone réactionnelle (riser), à une température de consigne propre à la charge craquée dans l'unité.

Le contrôle thermique de la régénération est effectué par la combinaison des organes suivants :

Des moyens de contrôle et d'asservissement 31 sont reliés à la vanne 30 disposée sur la conduite 17 d'évacuation du catalyseur de l'échangeur. Ces moyens sont d'autre part connectés à une sonde 32 de température localisée dans le lit dense du second régénérateur 9. Lorsque le signal envoyé par la sonde atteint une valeur supérieure à une valeur de consigne préalablement choisie en fonction des paramètres de la régénération, qui a été stockée par les moyens d'asservissement. Ceux-ci envoient un signal à la vanne 30 qui augmente le débit d'évacuation du catalyseur et de ce fait augmente le débit d'admission du catalyseur dans l'échangeur. Cette augmentation du débit contribue à une diminution de la température de première régénération enregistrée par la sonde de température 8 qui est alors compensée grâce aux moyens 31 par une augmentation de l'alimentation en oxygène ajustée par une vanne 33 sur la ligne 4 alimentant l'organe de fluidisation du premier régénérateur. Une plus grande quantité de coke peut alors y être brûlée.

Par contre, lorsque le signal envoyé par la sonde 32 atteint une valeur inférieure à la valeur de consigne, la vanne 30 est fermée partiellement de façon à diminuer l'échange thermique. Parallèlement, on diminue la consommation d'oxygène dans le premier régénérateur, on y brûle de ce fait moins de coke, ce qui contribue à réhausser la température du catalyseur dans le second régénérateur. De ce fait, la température est maintenue sensiblement constante dans la gamme de valeurs souhaitée.

## Revendications

1. Procédé de régulation ou de contrôle du niveau thermique dans une régénération en lit fluidisé et en continu d'un catalyseur usagé contenant du coke, dans lequel on effectue la régénération du catalyseur dans au moins une zone de régénération à lit fluidisé, on soutire de la dite zone une partie au moins du catalyseur, on envoie par une conduite inclinée vers le bas ladite partie du catalyseur contenu dans la zone de régénération ainsi qu'une partie des fumées de régénération dans une zone de régulation ou d'échange thermique externe de hauteur appropriée, avantageusement allongée, ayant un axe de symétrie contenant au moins un faisceau tubulaire d'échange thermique dans lequel circule un fluide de refroidissement vaporisable, ladite conduite reliant le lit dense de la zone de régénération à la zone d'échange thermique et y débouchant en un point de jonction situé sous le niveau du lit dense de la zone de régénération et disposé de telle façon que l'on détermine d'une part de l'extrémité inférieure de la zone d'échange thermique jusqu'au-dessus dudit point de jonction une zone en lit dense de catalyseur dont le niveau supérieur s'établit sensiblement jusqu'au niveau de catalyseur dans la zone de régénération, et d'autre part une zone de désengagement ayant un volume approprié au-dessus dudit lit dense jusqu'à l'extrémité supérieure de la zone d'échange, on refroidit le catalyseur dans ladite zone d'échange thermique en lit dense dans des conditions d'échange thermique indirect et de fluidisation adéquates, en présence d'un gaz de fluidisation contenant de l'oxygène, le catalyseur circulant vers le bas à contre-courant du sens d'écoulement du gaz de fluidisation, on procéde à la séparation du catalyseur et du gaz de fluidisation ainsi que des éventuelles fumées de régénération dans ledit volume de la zone de désengagement, on évacue les dits gaz et fumées de la zone de désengagement et on les envoie dans la phase diluée au-dessus du lit dense de la zone de régénération et on recycle le catalyseur refroidi de la partie inférieure de la zone d'échange thermique dans la zone de régénération, le procédé étant caractérisé en ce qu'on utilise ledit faisceau de tubes, enroulé ou disposé de telle façon que la partie du catalyseur que l'on fait circuler de manière descendante au moyen d'un fluide de fluidisation inerte ou non, en lit fluidisé, sur le faisceau de tubes, croise lesdits tubes de préférence sur sensiblement toute la section de la zone d'échange, ledit faisceau de tubes étant connecté en son extrémité inférieure à une conduite axiale d'amenée de fluide de refroidissement servant de système de maintien au dit faisceau.

2. Procédé selon la revendication 1 dans lequel ledit faisceau comporte des tubes enroulés en hélice suivant plusieurs diamètres par rapport à un axe d'enroulement sensiblement parallèle à l'axe de symétrie de la zone de régulation, de telle façon que les tubes de même diamètre d'enroulement forment une couche ou nappe cylindrique et que les diverses couches ou nappes cylindriques ainsi formées sont disposées les unes dans les autres.

3. Procédé selon la revendication 1 dans lequel la zone de régulation comporte une pluralité de faisceaux tubulaires comportant une première série de tronçons de tubes sensiblement parallèles dont les axes sont situés dans un premier plan et une seconde série de tronçons de tubes sensiblement parallèles dont les axes se trouvent dans un second plan sensiblement parallèle au premier, les tronçons associés à un plan présentant une inclinaison sensiblement égale et opposée à celle des tronçons de l'autre plan, les tronçons de tubes ayant des extrémités adjacentes d'un même côté reliés par des coudes, l'ensemble des faisceaux de tubes étant disposés de manière sensiblement parallèle au plan contenant l'axe de symétrie de la zone de régulation thermique.

4. Procédé selon la revendication 1, dans lequel la zone de régulation comporte une pluralité de faisceaux de tubes dont chacun d'eux comprend des tronçons de tubes sensiblement parallèles entre eux et disposés dans un même plan, les extrémités adjacentes d'un même côté, de deux tronçons successifs étant reliées par des coudes, l'ensemble des faisceaux de tubes étant disposé de manière sensiblement parallèle au plan contenant l'axe de symétrie de la zone de régulation thermique.

5. Procédé selon l'une des revendications 1 à 4, comprenant deux zones de régénération du catalyseur usagé, caractérisé en ce qu'on effectue une première régénération du catalyseur dans une première zone de régénération, on envoie le catalyseur au moins en partie régénéré dans une seconde zone de régénération située au-dessus de la première, on effectue une seconde régénération et on refroidit une partie au moins du catalyseur provenant de la seconde zone de régénération selon l'une des revendications 1 à 4 et on soutire le catalyseur ainsi refroidi pour l'envoyer dans la première zone de régénération ou dans la seconde zone de régénération.

6. Procédé selon l'une des revendications 1 à 4 comprenant deux zones de régénération du catalyseur usagé dont la seconde est au dessus de la première caractérisé en ce qu'on effectue une première régénération du catalyseur dans une première zone de régénération, on refroidit une partie au moins du catalyseur provenant de la première zone de régénération dans la dite zone d'échange thermique, on recycle le catalyseur refroidi dans la première zone de régénération et on envoie le catalyseur de la première zone de régénération dans la seconde.

7. Procédé selon l'une des revendications 1 à 6 dans lequel la distance entre les tubes (entre axe) est de 1,5 à 10 fois leur diamètre et de préférence de 2 à 3 fois leur diamètre.

8. Procédé selon l'une des revendications 1 à 7 dans lequel le faisceau d'échange thermique occupe sensiblement tout le volume du lit dense dans la zone de régulation ou d'échange thermique.

9. Procédé selon l'une des revendications 1 à 8 dans lequel la vitesse d'écoulement du fluide de refroidissement dans les tubes est de 0,5 à 2,5 m/s.

10. Procédé selon l'une des revendications 1 à 9 dans lequel la vitesse du gaz de fluidisation dans la zone d'échange thermique est de 0,01 m/s à 0,75 m/s et de préférence de 0,05 m/s à 0,3 m/s.

## Patentansprüche

1. Verfahren zur thermischen Regulierung oder Überwachung bei der Dauerregeneration eines kokshaltigen Altkatalysators in einer Wirbelschicht, wonach die Katalysatorregeneration in mindestens einem Regenerationsbereich mit Wirbelschicht erfolgt, es wird aus dem besagten Bereich mindestens ein Teil des Katalysators entnommen, der besagte Katalysatorteil aus dem Regenerationsbereich sowie ein Teil der Regenerationsrauchgase werden über eine nach unten geneigte Leitung in einen am besten längsgezogenen, außenstehenden Regulierungs- oder Wärmeaustauschbereich mit angemessener Höhe geleitet, dessen Mittelachse mindestens ein Rohrbündel für den Wärmeaustausch hat, in dem ein flüssiges, verdampfbares Kühlmittel fließt, die besagte Leitung verbindet die dichte Wirbelschicht des Regenerationsbereiches mit dem Wärmeaustauschbereich und mündet dort an einem Punkt ein, der sich unter der Wirbel-schichtobergrenze des Regenerationsbereiches befindet und so angeordnet ist, daß sich einerseits ein Bereich mit der dichten Katalysatorwirbelschicht, deren Oberfläche ungefähr gleich hoch mit der Katalysatorschicht in dem Regenerationsbereich ist, zwischen dem untersten Punkt des Wärmeaustauschbereiches bis oberhalb des besagten Einmündungspunkt, und andererseits ein Separierungsbereich mit angemessenem Volumen oberhalb der besagten dichten Wirbelschicht bis zum obersten Punkt des Wärmeaustauschbereiches bestimmen lassen, der Katalysator wird in dem besagten Wärmeaustauschbereich in einer Wirbelschicht unter für den indirekten Wärmeaustausch und die Aufwirbelung angemessenen Bedingungen unter Vorhandensein eines sauerstoffhaltigen Aufwirbelungsgases gekühlt, wobei der Katalysator absteigend, in der entgegengesetzten Fließrichtung zum Aufwirbelungsgas fließt, der Katalysator wird von dem Aufwirbelungsgas und den möglichen Regenerationsrauchgasen innerhalb des besagten Volumens des Separierungsbereiches getrennt, die besagten Gase und Rauchgase werden aus dem Separierungsbereich abgeleitet und in die verdünnte Phase oberhalb der dichten Wirbelschicht des Regenerationsbereiches zugeführt, der gekühlte Katalysator aus dem unteren Teil des Wärmeaustauschbereiches wird in den Regenerations-bereich gespeist, wobei das Verfahren dadurch gekennzeichnet ist, daß das besagte Rohrbündel verwendet wird, das gewickelt oder so angeordnet ist, daß der anhand von einem inerten oder nicht inerten Aufwirbelungsgas absteigend in der Wirbeschicht entlang der Rohrbündel zirkulierende Katalysatorteil auf die besagten Rohrbündel am besten über praktisch dem ganzen Durchmesser des Wärmeaustauschbereiches trifft, wobei das besagte Rohrbündel an seinem untersten Ende mit einer Mittelleitung für die Kühlmittelzufuhr verbunden ist, die als Haltesystem für das besagte Rohrbündel dient.

2. Verfahren nach Anspruch 1, wonach das besagte Bündel aus Rohren mit verschiedenen Wickeldurchmessern besteht, die spiralförmig um eine mit der Mittelachse des Wärme-austauschbereiches praktisch parallel verlaufende Wickelachse so gewickelt sind, daß die Rohre mit dem gleichen Wickeldurchmesser eine ringfömige Schicht oder Fläche bilden und die so gebildeten Schichten oder Flächen ineinander angeordnet sind.

3. Verfahren nach Anspruch 1, wonach der Regulierungsbereich eine Vielfalt von Rohrbündeln umfaßt, die eine erste Serie von fast parallel verlaufenden Rohrabschnitten aufweisen, deren Achsen in einer ersten Ebene liegen, und eine zweite Serie von ungefähr parallel verlaufenden Rohrabschnitten haben, deren Achsen sich in einer zweiten, der ersten Ebene ungefähr parallel verlaufenden Ebene befinden; die in einer bestimmten Ebene vorhandenen Rohrabschnitte weisen eine ungefähr gleiche aber entgegenlaufende Neigung zu den Rohrabschnitten der anderen Ebene auf; die Rohrabschnitte, deren Rohrendstücke auf einer Seite einander angrenzen, werden durch Rohrknie miteinander verbunden; alle Rohrbündel sind praktisch parallel zu der Ebene angeordnet, die die Mittelachse des Wärmeregulierungsbereiches enthält.

4. Verfahren nach Anspruch 1, wonach der Regulierungsbereich eine Vielfalt von Rohrbündeln mit je praktisch parallel zueinander verlaufenden, in der gleichen Ebene angebrachten Rohrab-schnitten umfaßt, wobei zwei nebeneinander liegende Rohrabschnitte über Knie verbunden sind und sämtliche Rohrbündel ungefähr parallel zu der Ebene eingebaut sind, die die Mittelachse des Wärmeaustauschbereiches enthält.

5. Verfahren nach einem der Ansprüche 1 bis 4 mit zwei Regenerationsbereichen für den Altkatalysator, dadurch gekennzeichnet, daß eine erste Katalysatorregeneration in einem ersten Regenerationsbereich stattfindet, der zum Teil regenerierte Katalysator einem zweiten, oberhalb des ersten liegenden Regenerationsbereich zugeführt wird, eine zweite Regeneration stattfindet, mindestens ein Teil des Katalysators aus dem zweiten Regenerationsbereich nach einem der Ansprüche 1 bis 4 gekühlt wird, der so gekühlte Katalysator entnommen und dem ersten oder dem zweiten Regenerationsbereich zurückgeführt wird.

6. Verfahren nach einem der Ansprüche 1 bis 4 mit zwei übereinander liegenden Regenerationsbereichen für den Altkatalysator, dadurch gekennzeichnet, daß eine erste Katalysatorregeneration in einem ersten Regenerationsbereich stattfindet, mindestens ein Teil des aus dem ersten Bereich stammenden Katalysators in dem besagten Wärmeaustauschbereich gekühlt wird, der gekühlte Katalysator in den ersten Regenerationsbereich zurückgeführt und der Katalysator aus dem ersten Regenerationsbereich in den zweiten eingespeist wird.

7. Verfahren nach einem der Ansprüche 1 bis 6, wonach der Abstand zwischen den Rohren (zwischen den Mittellinien) 1,5 bis 10 mal ihrem Durchmesser, am besten 2 bis 3 mal ihrem Durchmesser, entspricht.

8. Verfahren nach einem der Ansprüche 1 bis 7, wonach das Wärmeaustauschbündel praktisch das ganze Volumen der dichten Wirbelschicht des Regulierungs- oder des Wärmeaustausch-bereiches in Anspruch nimmt.

9. Verfahren nach einem der Ansprüche 1 bis 8, wonach die Fließgeschwindigkeit des Kühlmittels in den Rohren zwischen 0,5 und 2,5 m/s beträgt.

10. Verfahren nach einem der Ansprüche 1 bis 9, wonach die Geschwindigkeit des Aufwirbelungsgases in dem Wärmeaustauschbereich zwischen 0,01 m/s und 0,75 m/s, am besten zwischen 0,05 m/s und 0,3 m/s liegt.

## Claims

1. A process for thermal regulation or control in a continuous fluidised bed regeneration process for a used catalyst containing coke, wherein the catalyst is regenerated in at least one fluidised bed regeneration zone, at least a portion of said catalyst is extracted from said zone, said portion of catalyst in the regeneration zone and a portion of the regeneration fumes are transported by a downwardly inclined conduit to an external thermal regulation or exchange zone of appropriate height, preferably elongate, having an axis of symmetry and containing at least one thermal exchange tube array in which a vaporisable cooling fluid circulates, said conduit connecting the dense bed of the regeneration zone to the thermal exchange zone and opening thereinto at a junction point located under the level of the dense bed of the regeneration zone and disposed so that, on one hand, a dense bed zone of catalyst is determined from the lower extremity of the thermal exchange zone to above the junction point, the upper level of said zone being established substantially to the level of the catalyst in the regeneration zone and, on the other hand, a release zone is established of appropriate volume above said dense bed to the upper extremity of the exchange zone, the catalyst is cooled in said dense bed thermal exchange zone under indirect thermal exchange conditions and with adequate fluidisation, in the presence of a fluidisation gas containing oxygen, the catalyst circulating downwards counter-current to the fluidisation gas flow direction, the catalyst is separated from the fluidisation gas and any regeneration fumes in said release zone volume, said gases and fumes are evacuated from the release zone and transported to the dilute phase above the dense bed in the regeneration zone and the cooled catalyst is recycled from the lower portion of the thermal exchange zone to the regeneration zone, the process being characterised in that said tube array is wound or disposed so that the portion of catalyst which is circulated across the tube array in the fluidised bed in descending mode by means of an inert or non inert fluidisation fluid intersects said tubes preferably over substantially the entire cross section of the exchange zone, the lower end of said tube array being connected to an axial conduit for transporting the cooling fluid and maintaining said array.

2. Process according to claim 1 wherein said array comprises tubes wound into a helix with a plurality of diameters with respect to a winding axis which is substantially parallel to the axis of symmetry of the regulation zone, such that tubes having the same winding diameter form a cylindrical layer or surface and that the different cylindrical layers or surfaces thus formed are disposed one inside the other.

3. Process according to claim 1, wherein the regulation zone comprises a plurality of tubular arrays comprising a first series of substantially parallel tube sections whose axes are located in a first plane and a second series of substantially parallel tube sections whose axes are located in a second plane which is substantially parallel to the first plane, the sections in one plane being at a substantially equal and opposite inclination to that of the sections in the other plane, the tube sections with ends adiacent to one side being connected together by bent sections, the assembly of tubular arrays being positioned substantially parallel to the plane containing the axis of symmetry of the thermal regulation zone.

4. Process according to claim 1, wherein the regulation zone comprises a plurality of tube arrays wherein each tube comprises tube sections which are substantially parallel to each other and located in the same plane, the ends adjacent to one side of two successive sections being connected together by bent sections, the assembly of tube arrays being positioned substantially parallel to the plane containing the axis of symmetry of the thermal regulation zone.

5. Process according to any one of claims 1 to 4, comprising two used catalyst regeneration zones, characterised in that a first catalyst regeneration step is carried out in a first regeneration zone, the at least partially regenerated catalyst is transported to a second regeneration zone located above the first zone, a second regeneration step is carried out and at least a portion of the catalyst from the second regeneration zone is cooled in accordance with any one of claims 1 to 4 and the cooled catalyst is extracted for transport to the first regeneration zone or return to the second regeneration zone.

6. Process according to any one of claims 1 to 4, comprising two used catalyst regeneration zones, the second one being above the first one, characterized in that a first catalyst regeneration is carried out in a first regeneration zone, at least a part of the catalyst from the first regeneration zone is cooled in the thermal exchange zone, the cooled catalyst is recycled into the regeneration zone and the catalyst from the first regeneration zone is returned to the second one.

7. Process according to any one of claims 1 to 6, wherein the distance between the tubes (interaxial) is 1.5 to 10 times the diameter, preferably 2 to 3 times the diameter.

8. Process according to any one of claims 1 to 7, wherein the thermal exchange array occupies substantially the entire volume of the dense bed in the thermal regulation or exchange zone.

9. Process according to any one of claims 1 to 8, wherein the flow rate of the cooling fluid in the tubes is 0.5 to 2.5 m/s.

10. Process according to any one of claims I to 9, wherein the flow rate of the fluidisation gas in the thermal exchange zone is 0.01 m/s to 0.75 m/s, preferably from 0.05 m/s to 0.3 m/s.
